# EUROPÄISCHE PATENTANMELDUNG

(11) **EP 1 501 018 A2**
(43) Veröffentlichungstag der Anmeldung: **26.01.2005**
(21) Anmeldenummer: 04017237.1
(22) Anmeldetag: 21.07.2004
(51) Int. Cl.: G06F 13/40

(54) **Anschlussvorrichtung für Computer-Peripheriegeräte**

(30) Priorität: 21.07.2003 DE 10333108
(71) Anmelder: Schmidt, Peter, 51149 Köln (Porz) (DE)
(72) Erfinder: Schmidt, Peter, 51149 Köln (Porz) (DE)
(74) Vertreter: Feldkamp, Rainer, Dipl.-Ing.

(57) **Zusammenfassung**

Bei einer Anschlussvorrichtung für Computer-Peripheriegeräte, die über eine elektrische Verbindungseinrichtung mit einem Computer verbindbar sind, schliesst die Verbindungseinrichtung eine mechanisch starr und elektrisch mit dem Peripheriegerät verbindbare Versorgungseinrichtung(1) ein, die eine Leistungsversorgung für das Peripheriegerät und eine drahtlose Datenübertragungseinrichtung für die Datenübertragung an den Computer enthält.

## Beschreibung

Die Erfindung bezieht sich auf eine Anschlussvorrichtung für Computer-Peripheriegeräte der im Oberbegriff des Anspruchs 1 genannten Art.

Es ist eine Vielzahl von Computer-Peripheriegeräten bekannt, die über eine elektrische Verbindungseinrichtung mit einem Computer verbindbar sind, wie z. B. Drucker und andere Ausgabegeräte und beispielsweise Barcodeleser, Tastaturen und andere Eingabegeräte. Diese Peripheriegeräte sind zumeist über eine Leitungsverbindung mit einer Schnittstelle des Computers verbunden. In vielen Fällen ist jedoch eine Leitungsunabhängigkeit erwünscht, wobei in diesem Fall die elektrische Verbindung durch eine drahtlose Verbindungseinrichtung, beispielsweise eine Funk- oder Infrarot-Verbindungseinrichtung gebildet ist.

Viele vorhandene Computer-Peripheriegeräte, insbesondere auch handgehaltene Peripheriegeräte, sind jedoch lediglich für eine elektrische Leitungsverbindung ausgelegt.

Der Erfindung liegt die Aufgabe zu Grunde, eine Anschlussvorrichtung der eingangs genannten Art zu schaffen, die es ermöglicht, ein Computer-Peripheriegerät, das bisher für die Verwendung mit einer drahtgebundenen elektrischen Verbindungseinrichtung bestimmt war, für einen leitungsungebundenen Betrieb umzugestalten.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Die erfindungsgemäße Anschlussvorrichtung ermöglicht es, vorhandene Peripheriegeräte, die einen Anschluss für eine Verbindungseinrichtung in Form einer elektrischen Leitung aufweisen, für einen leitungsungebundenen Betrieb umzurüsten, wobei die Anschlussvorrichtung vorzugsweise die gleiche vorhandene Steckverbindung des Peripheriegerätes zur mechanisch starren und elektrischen Verbindung des Peripheriegerätes mit der Anschlussvorrichtung verwendet.

Die Anschlussvorrichtung enthält eine Leistungsversorgung in Form einer Batterie oder eines Akkumulators für das Peripheriegerät und eine drahtlose Datenübertragungseinrichtung für die Datenübertragung an den Computer sowie gegebenenfalls eine Datenübertragungseinrichtung zur Umwandlung und Übertragung von Daten an das Peripheriegerät.

Die Anschlussvorrichtung kann in Verbindung mit einer Ablageschale verwendet werden. Wenn die Anschlussvorrichtung in der Ablageschale abgelegt ist, kann diese eine Aufladung der in der Anschlussvorrichtung vorgesehenen Stromversorgungseinrichtung in Form eines Akkumulators bewirken.

Um eine bestimmte Position der Anschlussvorrichtung in einer derartigen Ablageschale automatisch sicherzustellen, kann die Ablageschale eine Vertiefung zur Aufnahme zumindest eines Teils des Gehäuses und/oder eine weitere Vertiefung zur Aufnahme des Verbindungselementes zwischen dem Gehäuse und dem Peripheriegerät aufweisen.

Hierbei ist gemäß einer bevorzugten Ausführungsform vorgesehen, dass das Gehäuse im wesentlichen kugelförmig ist und am Umfang einen elastischen Ring aufweist, wobei die Vertiefung der Ablageschale an ihrem Bodenbereich eine Nut zur Aufnahme des Ringes aufweist, um die Position des Gehäuses in der Ablageschale weiter festzulegen. Der elastische Ring ergibt hierbei gleichzeitig ein Auflageelement zur Auflage des Gehäuses beispielsweise auf einer Tischplatte.

Selbstverständlich ist es auch möglich, die Vertiefung der Ablageschale und das Gehäuse mit komplementären, von einer runden Form abweichenden Formen zu versehen, um eine eindeutige Lagefestlegung des Gehäuses in der Ablageschale zu erreichen.

Dies ist insbesondere dann von Bedeutung, wenn das Gehäuse und die Ablageschale Kontakte aufweisen, die beim Anordnen der Anschlussvorrichtung in der Ablageschale miteinander in Kontakt gelangen, um eine elektrische Verbindung zwischen einem in der Ablageschale angeordneten Ladegerät und einem in dem Gehäuse angeordneten Akkumulator herzustellen. Auf diese Weise kann eine kontinuierliche Aufladung des Akkumulators der Stromversorgung der Anschlussvorrichtung bei Nichtgebrauch der Anschlussvorrichtung bzw. des Peripheriegerätes erreicht werden.

Die Datenübertragungseinrichtung der Anschlussvorrichtung kann einen direkten Datenaustausch zwischen dem Peripheriegerät und einer Schnittstelle des Computers ermöglichen, oder die Datenübertragungseinrichtung kann mit einer in der Ablageschale angeordneten Datenübertragungseinrichtung in Kommunikation treten, wobei in diesem Fall die in der Ablageschale angeordnete Datenübertragungseinrichtung ihrerseits über eine Leitungsverbindung mit dem Computer verbunden ist.

Obwohl im Vorstehenden der Datenaustausch zwischen einem Peripheriegerät und einem Computer beschrieben wurde, kann der Computer auch durch ein anderes Gerät mit einer drahtlosen Schnittstelle ersetzt sein, wie z.B. ein Mobiltelefon, das Einrichtungen zur Erfassung und/oder Verarbeitung von Daten aufweist..

Ausführungsformen der Erfindung werden nachfolgend anhand der Zeichnungen noch näher erläutert.

In der Zeichnung zeigen:
Figur 1 eine Seitenansicht einer Anschlussvorrichtung gemäß einer Ausführungsform der Erfindung, wobei eine Ausführungsform der Ablageschale nur schematisch etwa im Schnitt dargestellt ist;
Figur 2 eine Seitenansicht der Ablageschale und der Anschlussvorrichtung nach Figur 1;
Figur 3 eine Vorderansicht der Ablageschale mit darin angeordneter Anschlussvorrichtung bei Betrachtung von dem Verbindungselement der Anschlussvorrichtung aus;
Figur 4 eine Rückansicht der Ablageschale mit darin angeordneter Anschlussvorrichtung;
Figur 5 eine der Figur 1 entsprechende Ansicht der Ablageschale und der Anschlussvorrichtung, die eine mögliche Anordnung von Kontakten zeigt.

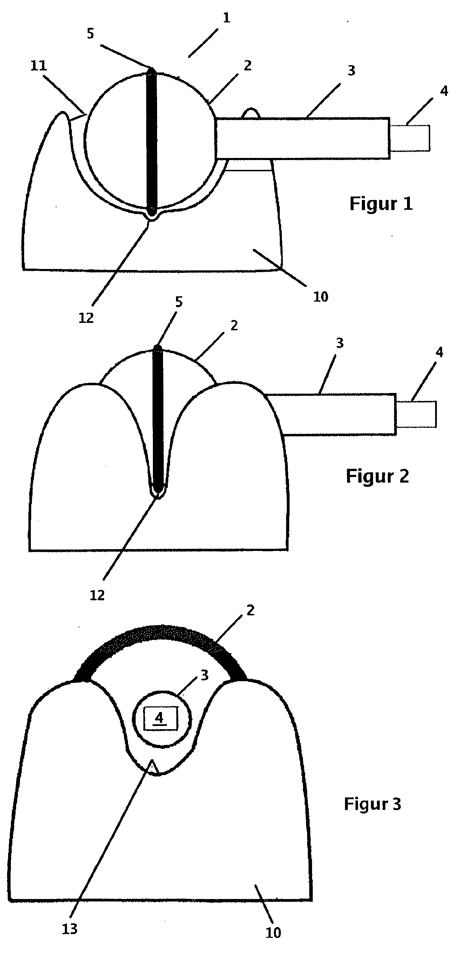

In Figur 1 ist eine Ausführungsform der Anschlussvorrichtung 1 gezeigt, die ein Gehäuse 2 und ein langgestrecktes stielförmiges Verbindungselement 3 umfasst, dessen eines Ende an dem Gehäuse 2 befestigt ist, während das andere Ende eine Steckverbindung 4 trägt, die mit einer hierzu komplementären Steckverbindung des (nicht gezeigten) Peripheriegerätes verbunden werden kann, wobei diese Steckverbindung sowohl eine mechanisch starre als auch elektrische Verbindung zwischen dem Peripheriegerät und der Anschlussvorrichtung 1 ergibt.

Das Gehäuse 2 der Verbindungseinrichtung enthält eine Leistungsversorgung für das Peripheriegerät und eine drahtlose Datenübertragungseinrichtung für die Datenübertragung an den Computer, wobei diese Einrichtungen nicht dargestellt sind, da sie in üblicher Form ausgebildet sind und für eine gewünschte Art der Übertragung, beispielsweise optisch oder durch Funk, ausgebildet sind. Diese Datenübertragungseinrichtung wird ebenfalls aus der in dem Gehäuse 2 angeordneten Leistungsversorgung gespeist. Das langgestreckte Verbindungselement enthält Drahtverbindungen zu der Steckverbindung 4, so dass beim Einstecken der Steckverbindung 4 in das Peripheriegerät sowohl die Stromversorgung des Peripheriegerätes als auch die Übertragung von Daten zwischen dem Peripheriegerät und der Anschlussvorrichtung ermöglicht wird.

Wie dies in den Figuren 1, 2, und 5 zu erkennen ist, ist das Gehäuse 2 vorzugsweise von einem elastischen Ring 5 umgeben, der beispielsweise in einer Umfangsnut des Gehäuses angeordnet ist, die sich in einer Umfangsrichtung senkrecht zur Längsrichtung des Verbindungselementes 3 erstreckt. Dieser elastische Ring ermöglicht einerseits eine elastische Auflage der Anschlussvorrichtung auf einer Ablagefläche, wie z. B. einer Tischplatte, wenn das Peripheriegerät und die Anschlussvorrichtung nicht in Gebrauch sind.

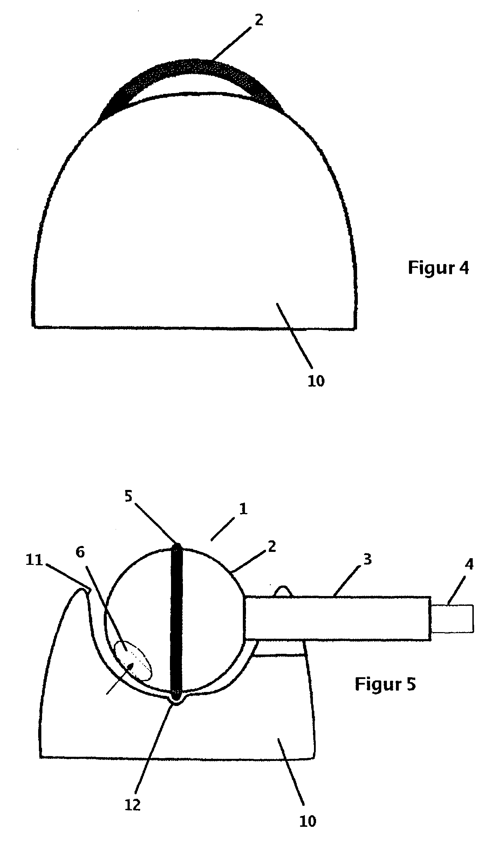

Die Anschlussvorrichtung kann bei Nichtgebrauch in einer Ablageschale 10 abgelegt werden, die eine erste Vertiefung 11 zur Aufnahme des Gehäuses sowie eine zweite Vertiefung 13 zur Aufnahme des langgestreckten Verbindungselementes 3 aufweist. Diese beiden Vertiefungen ergeben gegebenenfalls in Verbindung mit einer Nut 12, die einen Teil des Ringes 5 aufnimmt, eine exakte Positionierung der Anschlussvorrichtung in der Ablageschale 10, so dass beispielsweise in der in Figur 5 gezeigten Weise die Anschlussvorrichtung mit Kontakten 6 versehen sein kann, die mit hierzu komplementären Kontakten an geeigneter Stelle in der Ablageschale 10 zusammenwirken um bei einer Ablage der Anschlussvorrichtung in der Ablageschale beispielsweise ein Aufladen der Leistungsversorgung der Anschlussvorrichtung in Form eines Akkumulators zu ermöglichen.

Die Anschlussvorrichtung kann eine drahtlose Datenübertragungseinrichtung aufweisen, die Daten direkt an eine hierzu kompatible Datenübertragungseinrichtung des Computers überträgt.

Andererseits ist es auch möglich, dass die drahtlose Datenübertragungseinrichtung der Anschlussvorrichtung Daten an eine hierzu kompatible Datenübertragungseinrichtung in der Ablageschale 10 überträgt, die über eine Leitungsverbindung mit dem Computer verbindbar ist, so dass die Ablageschale eine Art von Relay bildet.

Die gezeigte Anschlussvorrichtung kann für eine Vielzahl von sehr unterschiedlichen Peripheriegeräten verwendet werden, die bisher über eine leitungsgebundene Verbindung mit einem Computer oder einem anderen Endgerät verbunden sind, wobei es hierzu gegebenenfalls lediglich erforderlich ist, die Steckverbindung 4 entsprechend auszugestalten. Auf diese Weise können vorhandene bisher über eine Leitung mit dem Computer verbundene Peripheriegeräte auf eine drahtlose Datenübertragung umgerüstet werden, ohne dass an dem Peripheriegerät zusätzliche Maßnahmen erforderlich sind.

## Patentansprüche

1. Anschlussvorrichtung für Computer-Peripheriegeräte, die über eine elektrische Verbindungseinrichtung mit einem Computer verbindbar sind,
**dadurch gekennzeichnet, dass** die Verbindungseinrichtung eine mechanisch starr und elektrisch mit dem Peripheriegerät verbindbare Versorgungseinrichtung(1) einschließt, die eine Leistungsversorgung für das Peripheriegerät und eine drahtlose Datenübertragungseinrichtung für die Datenübertragung an den Computer enthält.

2. Anschlussvorrichtung nach Anspruch 1, **dadurch gekennzeichnet, dass** die Versorgungseinrichtung (1) ein Gehäuse (2) zur Aufnahme der Leistungsversorgung und der Datenübertragungseinrichtung aufweist, und dass das Gehäuse (2) mit dem Peripheriegerät über ein stielförmiges Verbindungselement (3) verbunden ist.

3. Anschlussvorrichtung nach Anspruch 2, **dadurch gekennzeichnet, dass** eine Ablageschale (10) vorgesehen ist, die eine Vertiefung (11) zur Aufnahme zumindest eines Teils des Gehäuses (2) aufweist.

4. Anschlussvorrichtung nach Anspruch 4, **dadurch gekennzeichnet, dass** die Ablageschale (10) eine weitere Vertiefung (13) zur Aufnahme des Verbindungselementes (3) aufweist.

5. Anschlussvorrichtung nach einem der Ansprüche 2 bis 4, **dadurch gekennzeichnet, dass** das Gehäuse (2) im Wesentlichen kugelförmig ist und am Umfang einen elastischen Ring (5) aufweist, und dass die Vertiefung (11) der Ablageschale (10) an ihrem Bodenbereich eine Nut (12) zur Aufnahme des Ringes (5) aufweist, um die Position des Gehäuses (2) in der Ablageschale (10) festzulegen.

6. Anschlussvorrichtung nach einem der Ansprüche 3 bis 5, **dadurch gekennzeichnet, dass** die Ablageschale (10) Kontakte aufweist, die bei Ablage der Anschlussvorrichtung (1) in der Ablageschale mit an dem Gehäuse (2) vorgesehenen Kontakten (6) in Kontakt gelangen.

7. Anschlussvorrichtung nach einem der Ansprüche 2 bis 6, **dadurch gekennzeichnet, dass** von dem Gehäuse (2) abgewandte Ende des Verbindungselementes (3) eine Steckverbindung (4) zur elektrischen und mechanischen Verbindung der Anschlussvorrichtung (1) mit dem Peripheriegerät aufweist.

8. Anschlussvorrichtung nach einem der vorhergehenden Ansprüche, **dadurch gekennzeichnet, dass** die drahtlose Datenübertragungseinrichtung Daten direkt an eine hierzu kompatible Datenübertragungseinrichtung des Computers überträgt.

9. Anschlussvorrichtung nach einem der Ansprüche 1 bis 7, **dadurch gekennzeichnet, dass** die drahtlose Datenübertragungseinrichtung Daten an eine hierzu kompatible Datenübertragungseinrichtung in der Ablageschale (10) überträgt, die über eine Leitungsverbindung mit dem Computer verbindbar ist.

10. Anschlussvorrichtung nach einem der vorhergehenden Ansprüche, **dadurch gekennzeichnet, dass** die Ablageschale (10) ein Ladegerät für die Anschlussvorrichtung (1) enthält.

11. Anschlussvorrichtung nach einem der vorhergehenden Ansprüche, **dadurch gekennzeichnet, dass** der Computer Bestandteil eines Mobiltelefons ist, das zur Datenerfassung verwendet wird und eine drahtlose Schnittstelle aufweist.
